# EUROPÄISCHE PATENTANMELDUNG

(11) **EP 1 677 401 A1**
(43) Veröffentlichungstag der Anmeldung: **05.07.2006**
(21) Anmeldenummer: 04030889.2
(22) Anmeldetag: 28.12.2004
(51) Int. Cl.: H02G 1/04

(54) **Notgestänge für Freileitungen**

(71) Anmelder: IEF Generalunternehmung AG, 9495 Triesen (LI)
(72) Erfinder: Wegermann, Werner, Dipl.-Ing., 9498 Planken (LI)
(74) Vertreter: Büchel, Kaminski & Partner

(57) **Zusammenfassung**

Es wird ein Notgestänge vorgeschlagen, welches einen Mast (1) vorsieht, der kugelgelenkig auf einer Trägereinheit (5) angeordnet wird. Mast (1) und Trägereinheit (5) werden anhand von Mast- und Trägerverankerungsmitteln, insbesondere Mast- und Träger-Ankerseilen (4,4'), mit Ankereinheiten (6) verbunden, welche Ankereinheiten (6) so ausgebildet und angeordnet sind, dass eine stabile und standfeste Halterung von Mast (1) und Trägereinheit (5) gegeben ist. Das erfindungsgemässe Notgestänge kann gattungsgemäss schnell errichtet werden und ist besonders zum Einsatz im Falle des Versagens eines Freileitungsmastes und Ausfall der elektrischen Stromversorgung geeignet.

## Beschreibung

Die Erfindung bezieht sich auf ein Notgestänge gemäss dem Oberbegriff des Anspruchs 1, sowie ein Verfahren zur Errichtung eines Notgestänges, insbesondere beim Ausfall von Freileitungsmasten, gemäss dem Oberbegriff des Anspruchs 12.

Die Übertragung und Verteilung elektrischer Energie erfolgt - besonders im Bereich hoher Spannungen - über Freileitungen. Dazu werden Freileitungsmaste eingesetzt, an denen die im Allgemeinen blanken Leitungsseile aufgehängt werden. Die Maste sind meist als Konstruktionen mit mehreren Traversen bzw. Auslegern ausgeführt, an denen die Leiterseile über Isolatoren befestigt sind. Die Maste für Hochspannungs-Übertragungen sind im Allgemeinen in Abständen von ca. 400m angeordnet, die Anordnung muss aber selbstverständlich an die Gegebenheiten des Geländes angepasst werden. Die Höhe der Maste ist meist in der Grössenordnung einiger 10m, eine Mindesthöhe der Freileitungen über dem Boden ist aufgrund der Gefahr elektrischer Schläge aus Sicherheitsgründen vorgeschrieben. Auch ein Kontakt der Leitungen untereinander muss nach Möglichkeit verhindert werden, d.h. die neben- oder untereinander angeordneten Leiterseile bzw. Traversen müssen einen Abstand zueinander einnehmen, der einen Kontakt der Leitungen auch bei Ausschlag der Leitungsseile ausschliesst. Nichtsdestoweniger kommt es immer wieder zu Ausfällen von Freileitungen, beispielsweise bei extremen Wetterbedingungen wie Stürmen hoher Windenergie oder in Fällen mutwilliger Beschädigung. Der Ausfall eines Freileitungsmastes kann ein Versagen ganzer Hochspannungsleitungen oder Hochspannungsleitungsabschnitte der elektrischen Stromversorgung zur Folge haben, was mitunter einen lang andauernden Stromausfall für ganze Regionen und hohe Verluste für Industrie und Wirtschaft bedeutet. Um beim Ausfall von Stromleitungen eine möglichst rasche Wiederversorgung mit elektrischer Energie zu erreichen, müssen beschädigte Maste in möglichst kurzer Zeit ersetzt bzw. Übergangsmaste für Freileitungen rasch eingesetzt werden.

Im Stand der Technik eingesetzte Lösungen sind mit hohem Aufwand und Kosten verbunden, insbesondere in schwierigem Gelände. Im Allgemeinen werden Portalmasten aufgestellt, welche aber in der Höhe beschränkt, und deshalb - aufgrund des vorgeschriebenen Mindestabstandes der Seile zum Boden hin und untereinander - nur eingeschränkt einsetzbar sind. Des Weiteren besteht ein hoher Platzbedarf an ebenem Gelände, der eventuell mit Bagger oder Räumfahrzeugen hergestellt werden muss.
Es besteht ein Bedarf an einem Verfahren, welches eine gattungsgemäss schnelle und kostengünstige Möglichkeit zur Errichtung von Übergangs-Ersatzmasten zur Verteilung und Übertragung hoher Energien angibt und an einer Vorrichtung - im Folgenden als Notgestänge bezeichnet -, welche in gattungsgemäss kurzer Zeit errichtet werden kann, zum Aufhängen von Hochspannungs-Freileitungen geeignet ist und alle Anforderungen an Stabilität bzgl. auftretenden Zug-, Druck-, Torsionsbeanspruchungen, etc. erfüllt.

Die Aufgabe der vorliegenden Erfindung besteht daher darin, ein Notgestänge bereitzustellen, welches, insbesondere beim Ausfall von Freileitungsmasten, in gattungsgemäss kurzer Zeit errichtet werden kann.

Eine weitere Aufgabe der Erfindung ist es, ein Verfahren bereitzustellen, vermittels welchem eine Errichtung eines Notgestänges für Freileitungen mit gattungsgemäss geringem Zeitaufwand ermöglicht wird.

Diese Aufgaben werden durch die Verwirklichung der kennzeichnenden Merkmale des Anspruchs 1 bzw. des Anspruchs 12 gelöst. Alternative und/oder bevorzugte Lösungen werden durch die kennzeichnenden Merkmale der abhängigen Ansprüche beschrieben.

Bei einem erfindungsgemässen Verfahren zum Errichten eines Notgestänges, besonders beim Ausfall von Hochspannungsmasten bzw. Freileitungen, ist vorgesehen, an einem vorgegebenen Ort - das wird im Allgemeinen der Ort des beschädigten Mastes bzw. dessen unmittelbare Nähe sein - innerhalb kurzer Zeit - insbesondere nur einigen Stunden - ein Notgestänge aufzustellen. Dazu werden alle benötigten Baumittel an den vorgegebenen Ort transportiert und stehen dort zur Verfügung. In einem ersten Schritt werden eine Trägereinheit, sowie mehrere Ankereinheiten am Boden aufgestellt. Anschliessend wird die Trägereinheit über Trägerverankerungsmittel, i.A. Ankerseile, mit zwei oder mehreren Ankereinheiten verbunden, sodass eine Stabilisierung der Trägereinheit erreicht wird. An einem bereitgestellten Ersatzmast, der als Trag-, Abspann-, oder Endmast ausgebildet sein kann und mit Isolatoren, z.B. Langstab- oder Kettenisolatoren, ausgerüstet ist, werden Mastverankerungsmittel angebracht. Gegebenenfalls können die Mastverankerungsmittel auch bereits am Mast angebracht sein. Der Mast wird - im Allgemeinen mittels Helikopter, Autokran oder Stockbaum - so aufgestellt, dass er in ebenem Gelände annähernd aufrecht steht (in unebenem Gelände, z.B. in Hanglage wird der Mast im Allgemeinen schräg stehen), und die am Mast befestigten Mast-Ankerseile werden mit den Ankereinheiten verbunden. Es ist insbesondere vorgesehen, den Mast kugelgelenkig auf der Trägereinheit anzuordnen, um eine gewisse Bewegungsfreiheit des Mastes in zwei Raumrichtungen (Richtungen senkrecht zum Mast) zu erlauben. Durch diese Anordnung werden die Anforderungen an den Mast selbst bezüglich Festigkeit und Stabilität gegenüber Belastungen deutlich verringert und die auf den Mast einwirkenden Kräfte über die Mast-Ankerseile auf die Ankereinheiten verlagert. Auch auf die im Stand der Technik vorgesehenen Hängeisolatoren bzw. schwenkbaren Traversen oder Ausleger zur Milderung der unter Belastungen - wie bei erhöhtem Seilzug bei einem Leiterbruch oder ungleichmässigen Zusatzlasten auf die Leiter - auftretenden Kräfte kann durch die kugelgelenkige Aufstellung verzichtet werden.

Die Trägereinheit kann ein beliebiges Teil geeignet für den Aufsatz eines erfindungsgemässen Mastes sein. Vorzugsweise wird die Trägereinheit aber so ausgebildet, dass eine wannenartige oder wannenförmige Einrichtung mit einer Aushebung oder Ausbuchtung vorgesehen ist, in welcher der Mastbaum kugelgelenkig platziert wird. Die Form der Einrichtung ist also derart, dass sie für eine Platzierung des Mastbaums über ein Kugelgelenk geeignet und eventuell an die Form des Gelenks angepasst ist, also die kugelgelenkige Bewegung des Mastes unterstützt.
Die Trägereinheit kann ein- oder mehrstückig sein. In einer bevorzugten Ausführungsform setzt sich die Trägereinheit aus einer unteren Platte mit einem Aufsatz zusammen. Die untere Platte ist vorzugsweise eine Baggermatratze und der Aufsatz z.B. eine Art Stahlwanne bzw. Stahlplatte mit Seitenstützen oder mit integrierter zylinderförmiger Aushebung. Der Mast wird dann in die Stahlwanne bzw. in eine Mulde zwischen den Seitenstützen oder in den Zylinder gesetzt und aufgestellt. Die Trägereinheit erhält die notwendige Standfestigkeit, indem sie anhand von Trägerverankerungsmitteln mit Ankereinheiten verbunden wird. Dabei sind in, auf oder an der Trägereinheit Befestigungsmittel vorgesehen, die eine Befestigung der Trägerverankerungsmittel ermöglichen. Diese Befestigungsmittel können z.B. Ösen sein, die vorzugsweise an der Stahlplatte bzw. der wannenförmigen Einrichtung vorgesehen sind. Die Trägerverankerungsmittel werden also einerseits über Ösen an der Trägereinheit befestigt. Andererseits werden die Trägerverankerungsmittel mit Ankereinheiten mittel- oder unmittelbar verbunden.

Die Ankereinheiten sind Bauteile zur Verankerung des Mastbaums und/oder der Trägereinheit/en. Anzahl und Abstand der Ankereinheiten zur Trägereinheit bzw. zum Mast werden so berechnet, dass eine Stabilisierung der Trägereinheit bzw. des Mastes durch die Ankereinheiten gewährleistet wird. Die Ankereinheiten werden also in - durch Geländegegebenheiten und Anforderungen, z.B. bzgl. Stabilität, an das Notgestänge - vorgegebener/m Anzahl, Ort und Abstand zur Trägereinheit bzw. zum Mast positioniert und dienen der stabilen Halterung von Mast und Trägereinheit. Die Zahl der eingesetzten Ankereinheiten variiert mit den jeweiligen Gegebenheiten, im Allgemeinen werden aber wenigstens vier Ankerklötze benötigt. Dabei weisen dieselben insbesondere Einrichtungen auf, anhand derer ein zum Gewicht der Klötze zusätzlicher Halt der Ankereinheiten im Erdboden erreicht wird, solche "Greifeinrichtungen" können z.B. erdspatenartige Ausleger an den Ankereinheiten sein, die sich mit dem Boden verkeilen. Die Ankereinheiten können ein- oder mehrstückig sein, z.B. Klötze oder Sockel aus Beton. In einer bevorzugten Ausführungsform ist ein Rahmen aus Winkeleisen vorgesehen, auf welchen ein oder mehrere Klötze, insbesondere aus Beton, gestellt werden, ein solcher Betonklotz wiegt beispielsweise 2.5 Tonnen. In einer weiteren Ausführungsform werden die, z.B. als Stahlrohre ausgebildeten, Ankereinheiten im Erdboden eingegraben. Dabei sind zur Befestigung der Mast- und Trägerverankerungsmittel Einrichtungen an den Ankereinheiten vorgesehen, die insbesondere aus dem Erdboden herausragen, und eine Verbindung mit den Mast- und Trägerverankerungsmitteln erlauben. Die Mast- und/oder Träger-Ankerseile können also anhand von Einrichtungen am bzw. über dem Boden an den im Boden vergrabenen Stahlrohren befestigt werden.
Es versteht sich, dass die Ankereinheiten jede beliebige dem Zweck entsprechende Form haben können und zweckgebunden beliebig ausgebildet sein können. Beton als Material weist die erforderlichen Eigenschaften bezüglich Gewicht, Bearbeitungsfähigkeit, Kosten, etc. auf und wird deshalb bevorzugt eingesetzt, genauso könnte aber beispielsweise Grauguss verwendet werden.
An den Ankereinheiten können eine oder mehrere Einrichtungen zur Befestigung der Mast- und Trägerverankerungsmittel vorgesehen sein.

Als Mast- und Trägerverankerungsmittel werden meist handelsübliche Ankerseile - das sind im Allgemeinen Stahlseile - verwendet. Zur Befestigung an Trägereinheit/en, Mast und Ankereinheit/en sind die Ankerseile im Allgemeinen mit Befestigungseinrichtungen, z.B. Schäkel, versehen.

Der zu errichtende Mast kann die Eigenschaften eines Trag-, Abspann- oder Endmastes aufweisen. Er kann als jede Art von Mast zur Übertragung von elektrischer Energie mittels Freilandleitungen ausgebildet sein, insbesondere ist der Notgestänge-Mast für 380kV, 220kV und 110kV vorgesehen. Die "Ersatzmasten" werden im Allgemeinen in Abständen von ca. 400m aufgestellt, so dass die Leiterseile auch bei einem kalkulierten Höchst-Durchhang den zulässigen Mindestabstand zum Erdboden nicht unterschreiten.
Vorzugsweise ist der Mastbaum aus einzelnen Mastsegmenten zusammengesetzt, von denen beispielsweise ein jedes 5m lang ist, und weist an seinem dem Boden zugewandten Ende eine kugelgelenkige Einrichtung auf. Über das Kugelgelenk wird der Mast auf der Trägereinheit - bzw. der auf der Trägereinheit vorgesehenen Einrichtung zur Lagerung des Gelenks - gelagert. Die einzelnen Segmente können gleich oder unterschiedlich lang ausgebildet sein. Sie können eine, z.B. trapezförmige, Geometrie haben, die einen verwechslungssicheren - gerade unter dem Gesichtspunkt des Zeitdrucks - Aufbau gewährleistet. Der Freileitungsmast kann in Einzelteilen an den Errichtungsort transportiert und dort zusammengesetzt werden, er kann selbstverständlich genauso als Ganzes angeliefert und aufgestellt werden. Vorzugsweise ist der Mastbaum aus Aluminium ausgebildet, hat also ein gattungsgemäss geringes Gewicht.
Mit dem Mastbaum sind Isolatoren, z.B. Langstab- oder Kettenisolatoren, mittel- oder unmittelbar verbunden. Sie dienen in bekannter Art und Weise der Aufnahme von Leiterseilen.
Die Leiterseile des Stromnetzes sind an den Isolatoren angebracht, im Allgemeinen aufgehängt bzw. abgespannt. Als Leiter werden im Allgemeinen nicht-isolierte Leiterseile verwendet. Es ist mitunter möglich, Leiterseile der beschädigten Freileitung an das Notgestänge anzuhängen und so weiterzuverwenden. Falls das nicht möglich oder sinnvoll ist, werden unabhängige Leiter eingesetzt. Als Stromseile werden dabei vorzugsweise, aufgrund ihrer hohen elektrischen Leitfähigkeit, Verbundseile aus Aluminium und Stahl - z.B. Al/St 265/35 mm² - verwendet, die Leiterseile können aber selbstverständlich genauso aus z.B. Aldrey bestehen.
Zum Transport von Bauteilen, insbesondere Leiterseilen, ist gegebenenfalls ein Hilfsseil, im Allgemeinen aus Kunststoff, am Mastbaum vorgesehen, welches beispielsweise mittels Umlaufrollen vom unteren zum oberen Bereich des Mastes und vice versa bewegt werden kann. Die Umlaufrollen können als Einlaufrolle am unteren Mastende und als Auslaufrolle am oberen Mastende angebracht sein. Vorzugsweise wird das Seil vor Aufstellen des Mastes durch den Mast gezogen und aussen am Mast wieder heruntergezogen. Es kann auch ein zweites, drittes oder weiteres Hilfs- oder Transportseil vorgesehen werden. Auch sind vorzugsweise weitere Umlaufrollen in den Mastteilen mit den Ketten- bzw. Langstabisolatoren vorhanden, welche weitere Transportmöglichkeiten bieten. Die verschiedenen Umlaufrollen sind insbesondere auch um eine zum Mast parallele Achse (Längsachse) drehbar, d.h. sie lassen sich um den Mast drehen, sodass auf jeder Seite des Mastes gearbeitet werden kann.
An der Spitze des Mastbaums ist demselben zum Schutz vor Blitzeinschlägen vorzugsweise ein Erdseil in bekannter Art und Weise zugeordnet. Ausserdem kann die Mastspitze einen Drehkranz mit z.B. einigen Ösen aufweisen. Es wäre möglich, den Mast nur anhand von am Drehkranz befestigten Mast-Ankerseilen zu verankern, wodurch sich eine grosse Bewegungsfreiheit am Mastbaum selbst - z.B. bzgl. Hilfsseilen und Leiterseiltransport - erreichen liesse.

Das erfindungsgemässe Verfahren und das erfindungsgemässe Notgestänge werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Notgestänge,
- Fig. 2: einen erfindungsgemässen Mast,
- Fig. 3: im Detail den oberen Teil des erfindungsgemässen Mastes,
- Fig. 4: im Detail den unteren Teil des erfindungsgemässen Mastes und

- Fig. 5: in Draufsicht eine Trägereinheit zur kugelgelenkigen Lagerung des erfindungsgemässen Mastes.

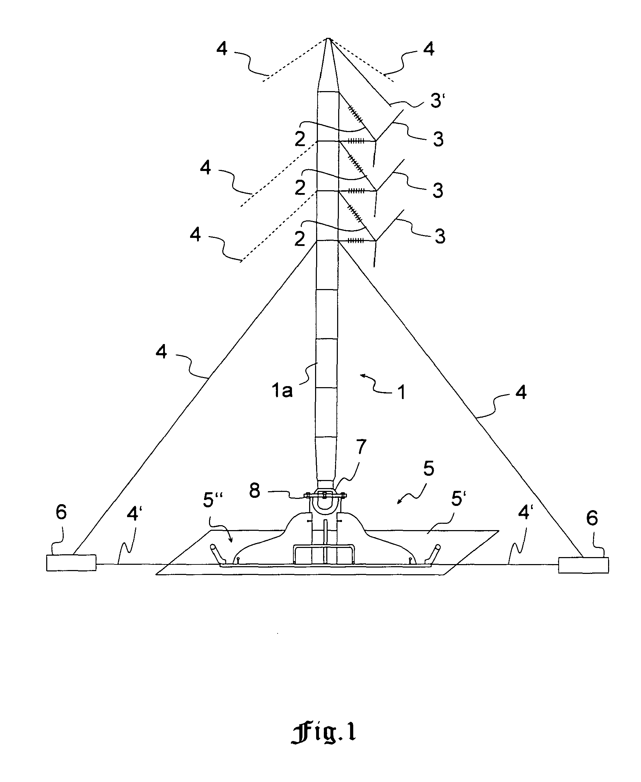

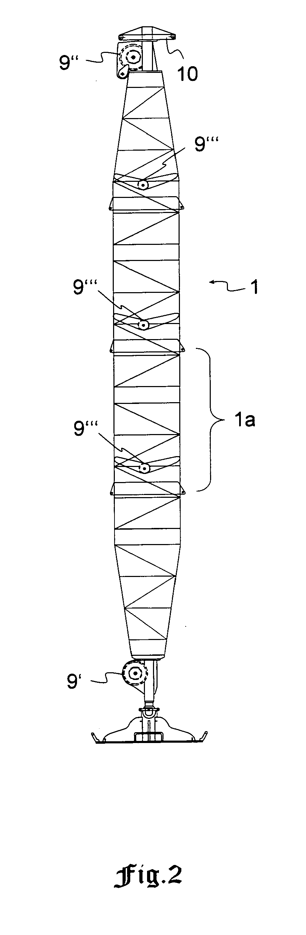

In Fig.1 ist eine mögliche Anordnung für ein erfindungsgemässes Notgestänge dargestellt. Ein Mast 1, der zu einem Trag-, Abspann- oder Endmast gehören kann, z.B. ein Gittermast aus Aluminium, ist hier mit drei Isolatoren 2 versehen. Es ist unter anderem möglich, hängende oder stehende Isolatoren aus beispielsweise Kunststoff, insbesondere Langstabisolatoren, einzusetzen. Für Spannungen über 220kV werden im Allgemeinen Kettenisolatoren aus z.B. hochfestem Kunststoff verwendet. An der Mastspitze angebracht ist ein Erdseil 3' zum Schutz der Leitung vor Blitzeinschlägen.
An den Isolatoren 2 sind Leiterseile 3 zur Übertragung elektrischer Energie, z.B. Strom, aufgehängt. Die Seile - Bündelleiter, insbesondere Zweierbündel, - sind Verbundseile aus Stahl und Aluminium mit einem Durchmesser von ca. 22.4 mm. Wird der Mast 1 als Notgestänge für eine beschädigte Freileitung aufgestellt, so werden, falls das möglich ist, die Leiterseile des schadhaften Mastes als Leiterseile 3 des Notgestänges verwendet. Können die "alten" Leiterseile nicht verwendet werden, so werden neue Phasenleiter am Notgestänge-Mast 1 angebracht und eine Brücke zur vorhandenen Leitung gebaut.
Am Mast 1 sind Einrichtungen zum Befestigen von Mastverankerungsmitteln, das sind hier Mast-Ankerseile 4 - insbesondere aus Stahl -, vorgesehen. Es können beliebig viele Befestigungsmöglichkeiten am Mast 1 eingerichtet sein, je nach den Gegebenheiten im Gelände und Anforderungen an die Freileitung bzw. den Freileitungsmast werden mehr oder weniger Verankerungen nötig sein. Es ist jedoch sinnvoll, den Mast 1 mit wenigstens vier Mast-Ankerseilen 4 an Ankereinheiten 6, hier Betonklötze, zu verankern. Die Mast-Ankerseile 4 können am Mast 1 z.B. etwa auf Höhe der Isolatoren 2 und der Mastspitze angebracht werden. Eine weitere Möglichkeit ist, dass ein Drehkranz 10 (Fig. 2) an der Mastspitze Befestigungseinrichtungen für Mast-Ankerseile 4 aufweist, wie z.B. Ösen, und die Verankerung des Mastes 1 mit den Ankereinheiten 6 am Drehkranz 10 erfolgt. Durch eine solche Verankerung des Mastbaums an dessen Spitze kann der restliche Mast 1 von Mast-Ankerseilen 4 frei gehalten werden, wodurch mehr Bewegungsfreiheit für Arbeiten am Mast 1 erreicht wird. Die Ankereinheiten 6 zur Abankerung des Mastes 1 sind meist mit einem Rahmen aus Winkeleisen ausgebildet, auf welchen Rahmen Klötze aus z.B. Beton oder Grauguss gestellt werden. Sie werden in kalkulierter Anzahl und Abständen zum Mast 1 aufgestellt. Die Ankerklötze sind so berechnet, dass sie die Last der Anker aufnehmen. Sie können noch mit Greifeinrichtungen oder Stützen, z.B. sogenannten "Bergstützen" oder "Erdhaken", ausgebildet sein, um zusätzlichen Halt im Boden zu erlangen.
Der Mast 1 ist aus gattungsgemäss leichtem Material gebaut, insbesondere Aluminium, sodass der gattungsgemäss leichte und hohe Mast 1 sehr schnell, d.h. z.B. in wenigen Stunden, aufgestellt werden kann.
Aufgestellt wird der Mast 1 auf einer dafür konzipierten Trägereinheit 5, die das Gewicht des Mastes 1 aufnimmt und ein Absinken in den Boden verhindert. Die Trägereinheit 5 ist hier als untere Platte 5' mit darauf angeordnetem wannenförmigen Aufsatz 5'' - eine Art Stahlwanne - dargestellt. Der Mast 1 weist an seinem unteren Ende eine kugelgelenkige Einrichtung auf, die in der Stahlwanne gelagert wird. Nach Versenken des Kugelgelenks 7 in der Wanne wird das Kugelgelenk 7 mit einem Deckel 8 versehen und so in der Wanne gehalten, z.B. indem der Deckel 8 angeschraubt wird. Die, z.B. wannenförmige, Trägereinrichtung 5 kann noch mit einem Flansch ausgepolstert werden. Diese Lagerung des Mastes 1 ist vorgesehen, um die von den Leiterseilen 3 ausgehenden Kräfte, z.B. Zugkräfte, vom Mast 1 auf die Ankereinheiten 6 zu verlagern.

Fig. 2 zeigt den Mastbaum als solchen mit zusätzlichen Einrichtungen für Arbeits- oder Hilfsseile. Der Mast 1 ist hier als Gittermast aus Aluminium ausgebildet und aus einzelnen Mastsegmenten 1a zusammengesetzt. Die
Mastsegmente 1a werden miteinander verbunden, insbesondere ineinander gesetzt und verschraubt. Der Mast 1 weist an seinem unteren und oberen Ende als Einlauf- und Auslaufrolle ausgebildete Umlaufrollen 9',9" für ein Hilfsseil auf. Das Hilfs- oder Arbeitsseil wird vor Aufstellen des Mastes 1 über die als Einlaufrolle ausgebildete Umlaufrolle 9' innen durch den Mast 1 gezogen und über die als Auslaufrolle ausgebildete Umlaufrolle 9" aussen am Mast wieder zurückgeholt. Es dient als Arbeitsseil zum Transport von Bauteilen entlang der Höhe des Mastes 1. Der Mast 1 ist hier mit weiteren Einrichtungen - Umlaufrollen 9''' - für weitere Hilfsseile versehen. Es können beliebig viele Rollen am Mast 1 vorgesehen werden, z.B. in der Mitte für Vertikaltransporte von z.B. Leiterseilen von einem Mast 1 zum anderen. Die verschiedenen Umlaufrollen 9',9'',9''' sind so ausgebildet, dass sie um eine auf den Boden annähernd vertikale und zum Mast 1 annähernd parallele Achse drehbar sind, sodass Bauteile am gesamten Umfang des Mastes 1 transportiert werden können.

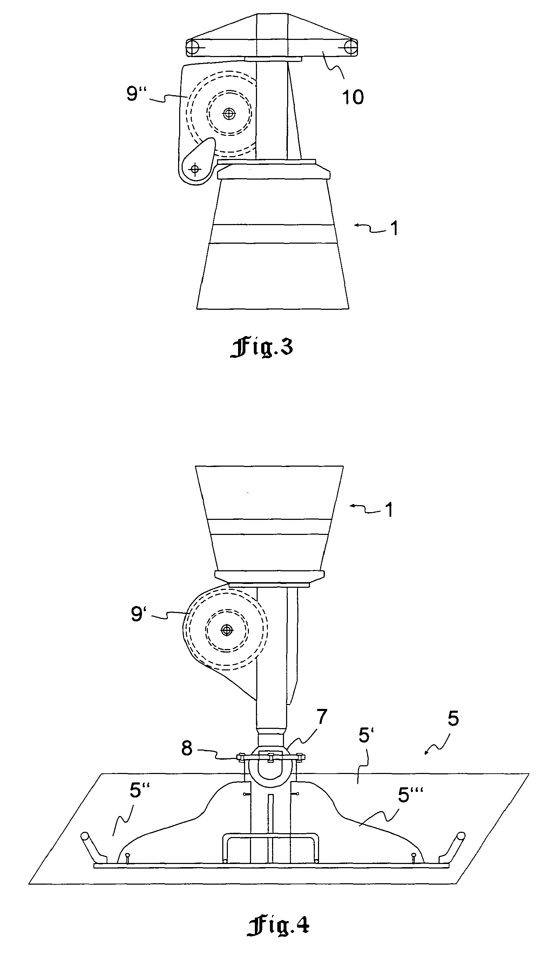

In Fig. 3 dargestellt ist ein detaillierter Ausschnitt des oberen Teils des Mastes 1. Der Drehkranz 10 an der Mastspitze sieht Befestigungen für Mast-Ankerseile 4 vor. Ausserdem wird im Allgemeinen an der Mastspitze das Erdseil 3' angebracht. Mit der Umlaufrolle 9'', an der Mastspitze als Auslaufrolle bezeichnet, kann ein Hilfsseil zum Transport von nachträglich am Mast 1 zu installierenden Bauteilen am Mast 1 hochgezogen werden.

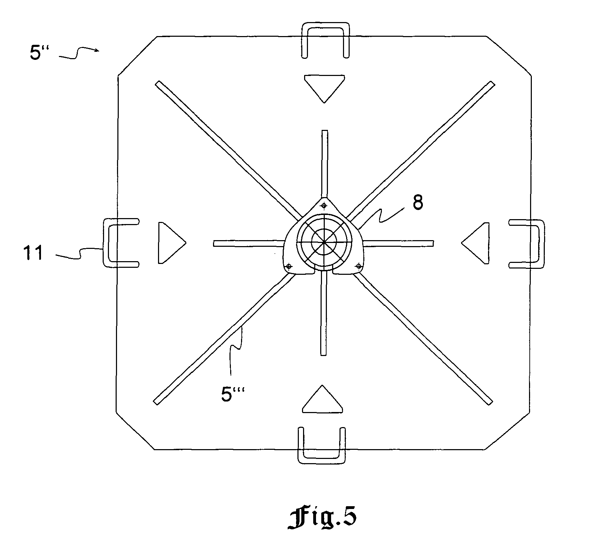

Fig. 4 zeigt im Detail einen Ausschnitt des unteren Mastteils mit einer als Einlaufrolle ausgebildeten Umlaufrolle 9' für ein Hilfs- und Arbeitsseil. Dargestellt ist auch die Trägereinheit 5, die sich hier aus einer Platte 5' mit darauf angeordneter Stahlwanne zusammensetzt. Die untere Platte 5' ist eine sogenannte Baggermatratze, darunter versteht man im Allgemeinen Konstruktionen aus Hartholz, die sich für vielfältigste Aufgaben eignen, wie z.B. als befahrbare Baustrasse, als Schiffsboden, als Fahrbahndecke auf Stahlträger einer Behelfsbrücke, als Umrandung eines Schüttgutlagers, als Schutz bei extrem belasteter Hartgummibereifung von Hebefahrzeugen, für Instandsetzungen zwischen Bahnschienen und überall dort, wo grosse Lasten auf schwierigem Untergrund schnell und kostengünstig bewegt werden müssen. Die obere Trägereinheit ist ein wannenförmiger Aufsatz 5'' zur Lagerung der Kugel am Mastende, welcher wannenförmige Aufsatz 5" Seitenstützen 5''' umfasst, die eine stabile Lagerung des Kugelgelenks 7 des Mastes 1 ermöglichen. Die Seitenstützen 5' ' ' sind insbesondere so ausgebildet und angeordnet, dass eine Art Mulde entsteht, in die das Kugelgelenk 7 versenkt werden kann. Dargestellt ist auch der Kugelgelenk-Deckel 8 mit Verschraubungen. Es versteht sich, dass die kugelgelenkige Lagerung des Mastes 1 auf alle Arten von Masten, wie z.B. Holz-, Stahlrohr- oder Stahlfachwerkmaste, angewandt werden kann.
Die Träger-Stahl-Einheit weist Befestigungsmöglichkeiten für Träger-Ankerseile 4' zur Verankerung der Träger-Stahl-Einheit an den Ankereinheiten 6 auf. Zu Baubeginn wird die Trägereinheit 5 aufgestellt und mit Trägerverankerungsmitteln, das sind meist Anker-Stahlseile, mit zwei oder mehreren Ankereinheiten 6 verbunden. So wird die Trägereinheit 5 fest und stabil in einer vorgegebenen Position gehalten.

Fig. 5 zeigt den wannenförmigen Aufsatz 5" der Trägereinheit 5 in Draufsicht. Auf einer hier nicht dargestellten Baggermatratze ist eine hier mit Tragegriffen 11 ausgestattete Einrichtung, im Allgemeinen aus Stahl, für die kugelgelenkige Aufnahme des Freileitungsmasts vorgesehen. Die Einrichtung ist an der hier nicht gezeigten unteren Matratzen-Platte befestigt, z.B. verschraubt. Sie kann auch nur auf die untere Platte 5' gestellt, oder aber in die untere Platte 5' integriert sein, d.h. die Trägereinheit 5 könnte ein einstückiges Teil darstellen. In der Mitte der Stahlwanne - zwischen den Seitenstützen 5"' - dargestellt ist eine Art kreis- oder muldenförmige Lagerungseinheit zur Aufnahme des Kugelgelenks 7 des Mastes 1.
Zum Tragen des Mastes 1 benötigt wird eine Einrichtung, welche das Mastgewicht aufnehmen und verteilen kann und eine Möglichkeit zur kugelgelenkige Lagerung des Mastes 1 bereitstellt. Eine solche Einrichtung wird in diesem Ausführungsbeispiel durch eine nicht dargestellte Baggermatratze mit einem wannenförmigen Aufsatz 5'' aus Stahl mit Seitenstützen 5''', in deren Mitte das hier nicht gezeigte Kugelgelenk 7 des Mastes 1 in einer kreisförmigen Mulde versenkt und über einen Deckel 8 in der Mulde gehalten wird, bereitgestellt.

## Patentansprüche

1. Notgestänge für Freileitungen, insbesondere zum Einsatz beim Ausfall von Freiland-Hochspannungsleitungen mit
• einem als Trag-, Abspann-, oder Endmast ausgebildeten Mast(1) mit
- Isolatoren (2), welchen Isolatoren (2) Leiterseile (3) und/oder gegebenenfalls Leiterseile der ausgefallenen Hochspannungsleitungen zuordenbar, insbesondere daran aufhängbar, sind und
- gegebenenfalls einem Erdseil (3') und
• einer Trägereinheit (5) zur Lagerung des Mastes (1),
**dadurch gekennzeichnet, dass**
• dem Mast (1) Mastverankerungsmittel, insbesondere Mast-Ankerseile (4), zur standfesten Halterung des Mastes (1) auf der Trägereinheit (5) zugeordnet sind,
• der Trägereinheit (5) Trägerverankerungsmittel, insbesondere Träger-Ankerseile (4'), zugeordnet sind, und
• die Mast- bzw. Trägerverankerungsmittel einerseits dem Mast (1) bzw. der Trägereinheit (5) und andererseits am oder im Boden angeordneten Ankereinheiten (6), insbesondere aus Beton, zugeordnet sind.

2. Notgestänge nach Anspruch 1, **dadurch gekennzeichnet, dass** der gegebenenfalls einstückigen Trägereinheit (5)
• eine am Erdboden angeordnete Platte (5'), insbesondere eine Baggermatratze,
• eine wannenförmige Aushebung und/oder ein wannenförmigen Aufsatz (5"), insbesondere eine Stahlwanne, und
• wenigstens eine, insbesondere ösenförmige, Befestigungseinrichtung zugeordnet ist.

3. Notgestänge nach Anspruch 1 oder 2, **dadurch gekennzeichnet, dass** der Mast (1) kugelgelenkig auf oder in der Trägereinheit (5), insbesondere auf oder in der wannenförmigen Aushebung bzw. dem wannenförmigen Aufsatz (5''), angeordnet ist.

4. Notgestänge nach einem der vorangehenden Ansprüche, **dadurch gekennzeichnet, dass** dem Mast (1) an seinem dem Boden zugewandten Ende ein Kugelgelenk (7) zugeordnet ist.

5. Notgestänge nach einem der vorangehenden Ansprüche, **dadurch gekennzeichnet, dass** die Ankereinheiten (6) Einrichtungen zur Befestigung der Mast- und Trägerverankerungsmittel aufweisen.

6. Notgestänge nach einem der vorangehenden Ansprüche, **dadurch gekennzeichnet, dass** die Ankereinheiten (6) Greifeinrichtungen, insbesondere Bergstützen, zur Verhakung im Boden umfassen.

7. Notgestänge nach einem der vorangehenden Ansprüche, **dadurch gekennzeichnet, dass** die Ankereinheiten (6) im Boden eingrabbar und insbesondere als Stahlrohre ausgebildet sind und Einrichtungen zur Befestigung der Mast- und Trägerverankerungsmittel aufweisen, welche Einrichtungen bei eingegrabenen Ankereinheiten (6) insbesondere aus dem Boden ragen.

8. Notgestänge nach einem der vorangehenden Ansprüche, **dadurch gekennzeichnet, dass** am Mast (1) als Einlauf- und Auslaufrolle ausgebildete Umlaufrollen (9',9'') zum Führen eines Hilfsseils an die Spitze des Mastes (1) und zurück zum Boden vorgesehen sind.

9. Notgestänge nach einem der vorangehenden Ansprüche, **dadurch gekennzeichnet, dass** am Mast (1) weitere Umlaufrollen (9''') für Hilfsseile vorgesehen sind.

10. Notgestänge nach einem der vorangehenden Ansprüche, **dadurch gekennzeichnet, dass** der Mast (1) aus einer Vielzahl einzelner, gegebenenfalls trapezförmig ausgebildeter, Mastsegmente (1a) zusammengesetzt ist.

11. Notgestänge nach einem der vorangehenden Ansprüche, **dadurch gekennzeichnet, dass** dem Mast (1) wenigstens vier Mastverankerungsmittel zugeordnet sind.

12. Verfahren zur Errichtung eines Notgestänges, insbesondere beim Ausfall von Freiland-Hochspannungsleitungen, mit den Schritten
• Anordnen einer Trägereinheit (5) am vorgesehenen Errichtungsort,
• Anordnen von, gegebenenfalls im Boden vergrabenen, Ankereinheiten (6) in vorgegebener Entfernung und Position zur Trägereinheit (5),
• Bereitstellen von Mast- und Trägerverankerungsmitteln, insbesondere Mast- und Träger-Ankerseilen (4,4'), am Errichtungsort,
• Verbinden der Trägerverankerungsmittel mittel- oder unmittelbar mit der Trägereinheit (5), insbesondere an der Trägereinheit (5) zugeordneten Befestigungsmitteln, wie Ösen, und den Ankereinheiten (6),
• Bereitstellen eines als Trag-, Abspann-, oder Endmast ausgebildeten Mastes (1) mit
- Isolatoren (2), welchen Isolatoren (2) Leiterseile (3) und/oder gegebenenfalls Leiterseile der ausgefallenen Hochspannungsleitungen zuordenbar, insbesondere daran aufhängbar oder abspannbar, sind und
- gegebenenfalls einem Erdseil (3')
am Errichtungsort,
• Verbinden der Mastverankerungsmittel mittel- oder unmittelbar mit dem Mast (1),
• Aufstellen des Mastes (1) am Errichtungsort, insbesondere vermittels eines Autokrans, Helikopters oder Stockbaums, und
• Verbinden der mit dem Mast (1) verbundenen Mastverankerungsmittel mittel- oder unmittelbar mit den Ankereinheiten (6).

13. Verfahren nach Anspruch 12, **dadurch gekennzeichnet, dass** der Mast (1), insbesondere am Errichtungsort, aus einzelnen Mastsegmenten (1a) zusammengesetzt wird.

14. Verfahren nach Anspruch 12 oder 13, **dadurch gekennzeichnet, dass** der Mast (1) kugelgelenkig auf oder in der Trägereinheit (5) angeordnet wird.

15. Verfahren nach einem der Ansprüche 12 bis 14, **dadurch gekennzeichnet, dass** anhand von Hilfsseilen, welche dem Mast (1), insbesondere vermittels
Umlaufrollen (9',9'',9'''), zugeordnet werden, Leiterseile (3) und/oder gegebenenfalls Leiterseile der ausgefallenen Hochspannungsleitungen zum und/oder vom Mast (1) bewegt werden.
